## Europäisches Patentamt

## European Patent Office

## Office européen des brevets

(19)

(11) Veröffentlichungsnummer: **0 104 397**
**B1**

(12) **EUROPÄISCHE PATENTSCHRIFT**

(45) Veröffentlichungstag der Patentschrift:
**03.05.89**

(51) Int. Cl.⁴: **H 05 B 41/392**

(21) Anmeldenummer: **83108039.5**

(22) Anmeldetag: **13.08.83**

(54) Schaltungsanordnung zur Verminderung der Leistungsaufnahme einer Leuchtstofflampe.

(30) Priorität: **02.09.82 DE 3232592**

(43) Veröffentlichungstag der Anmeldung:
**04.04.84 Patentblatt 84/14**

(45) Bekanntmachung des Hinweises auf die Patenterteilung:
**03.05.89 Patentblatt 89/18**

(84) Benannte Vertragsstaaten:
**AT BE CH DE FR GB IT LI NL SE**

(56) Entgegenhaltungen:
**EP-A- 0 015 888**
**BE-A- 680 219**
**US-A- 3 925 705**

(73) Patentinhaber: **Lück, Harald, Cheruskerweg 56,
D-6000 Frankfurt/Main 80 (DE)**

(72) Erfinder: **Lück, Harald, Cheruskerweg 56,
D-6000 Frankfurt/Main 80 (DE)**

(74) Vertreter: **Goddar, Heinz J., Dr. et al, FORRESTER &
BOEHMERT Widenmayerstrasse 4/I,
D-8000 München 22 (DE)**

ACTORUM AG

### Beschreibung

Die Erfindung betrifft eine Schaltung zur Verminderung der Leistungsaufnahme einer Leuchtstofflampe durch eine Phasenanschnittssteuerung mittels zweier steuerbarer, antiparallel liegender elektrischer Ventile.

Leuchtstofflampen lassen sich – anders als herkömmliche Glühlampen – nicht problemlos durch eine Phasenanschnittssteuerung in der Helligkeit – und damit in der Leistungsaufnahme – regulieren, weil Leuchtstofflampen nur dann leuchten, wenn eine Mindestspannung zwischen den Elektroden angeordnet ist. Verlischt die Leuchtstofflampe wegen Unterschreitens dieser Spannung, so muß sie erneut durch Aufbringen der zur Zündung erforderlichen Spannung gezündet werden.

Aus der AT-A-26 76 78 ist eine Schaltung bekannt, bei der mittels zweier antiparallel geschalteter elektrischer Ventile die Leuchtstofflampe periodisch ein- und ausgeschaltet wird, wobei zur Gewährleistung des Zündens der Leuchtstofflampe zusätzlich zu der angeschnittenen Speisespannung ein Zündimpuls zugeführt wird.

Bei einer derartigen Schaltung hat sich jedoch der Bereich, in dem die Helligkeit reguliert werden kann, als unzureichend erwiesen; auch tritt – insbesondere wenn ein Zündimpuls eine Zündung nicht bewirken konnte – ein störendes Flackern der Leuchtstofflampe auf.

Der Erfindung liegt die Aufgabe zugrunde, eine Schaltungsanordnung der eingangs genannten Art zu schaffen, bei der ein großer Einstellbereich der Leistungsaufnahme und damit der Helligkeit der Leuchtstofflampe bei völliger Flackerfreiheit gewährleistet ist, wobei vorzugsweise auch ein besonders sicheres Zünden gewährleistet sein soll.

Erfindungsgemäß wird diese Aufgabe gelöst durch eine Parallelschaltung eines Grundstromwiderstandes, der elektrischen Ventile und eines RC-Gliedes, wobei der Widerstand des RC-Gliedes einstellbar ist und die Ventile von einer Vierschichtdiode steuerbar sind, welche die über dem Kondensator liegende Spannung abfragt und bei Überschreiten eines Schwellwertes die Ventile öffnet.

Eine bevorzugte Ausführungsform der Erfindung sieht vor, daß die steuerbaren elektrischen Ventile einen Triac aufweisen.

Dabei kann insbesondere auch vorgesehen sein, daß der Widerstand des RC-Gliedes aus einem festen Widerstand und einem einstellbaren Widerstand besteht.

Eine besonders bevorzugte Ausführungsform der Erfindung ist gekennzeichnet durch eine Überbrückungseinrichtung zum Überbrücken zumindest des einstellbaren Widerstandes des RC-Gliedes während des Einschaltvorganges bis zum Zünden der Leuchtstofflampe. Durch die Überbrückung des Widerstandes des RC-Gliedes während des Einschaltvorganges wird gewährleistet, daß zum Zünden der Lampe in jedem Fall im wesentlichen die volle Spannung zur Verfügung steht, da die Überbrückungseinrichtung den Widerstand bzw. den einstellbaren Widerstand des RC-Gliedes erst nach erfolgtem Starten der Leuchtstofflampe wirksam werden läßt.

Dabei kann insbesondere vorgesehen sein, daß die Überbrückungseinrichtung einen elektrischen Schaltkreis aufweist.

In weiterer Ausbildung dieser Ausführungsform schlägt die Erfindung vor, daß der elektrische Schaltkreis einen Zeitkreis aufweist.

Weiterhin kann dabei vorgesehen sein, daß der elektrische Schaltkreis eine Photodiode aufweist, die das erfolgreiche Starten der Leuchtstofflampe feststellt.

Bei einer anderen Ausführungsform der Erfindung ist vorgesehen, daß die Überbrückungseinrichtung ein im Ruhezustand geschlossenes Schaltglied aufweist, welches durch ein galvanisch hiervon getrenntes, im Stromkreis der Leuchtstofflampe liegendes Betätigungsglied derart beaufschlagbar ist, daß das Schaltglied mit vorzugsweise einstellbarer zeitlicher Verzögerung nach dem Einschalten der Leuchtstofflampe öffnet und nach dem Abschalten erneut schließt. Diese Ausführungsform hat den Vorteil, auch bei zwei Leitersystemen ohne weiteres verwendbar zu sein, da kein separater elektrischer Schaltkreis zum Überbrücken des Widerstandes des RC-Gliedes vorgesehen ist, sondern die Überbrückungseinrichtung aus einem nicht-elektrisch von einem im Lampenstromkreis liegenden Betätigungsglied beaufschlagbaren Schaltglied besteht.

Dabei kann insbesondere vorgesehen sein, daß das Schaltglied aus einem Thermobimetallkontakt oder dergleichen und das Betätigungsglied aus einem diesem benachbarten Heizwiderstand oder dergleichen besteht.

Auch kann gegebenenfalls vorgesehen sein, daß das Schaltglied aus einem beleuchtungsabhängigen elektrischen Widerstand oder dergleichen und das Betätigungsglied aus einem Leuchtelement oder dergleichen besteht.

Weitere Merkmale und Vorteile der Erfindung ergeben sich aus der nachfolgenden Beschreibung, in der Ausführungsbeispiele anhand der Zeichnung im einzelnen erläutert sind. Dabei zeigt:

Fig. 1 ein erstes Ausführungsbeispiel der erfindungsgemäßen Schaltungsanordnung mit elektrischem Schaltkreis als Überbrücksungseinrichtung für den einstellbaren Widerstand des RC-Gliedes; und

Fig. 2 ein weiteres Ausführungsbeispiel einer Schaltungsanordnung nach der Erfindung, wobei ein nicht-galvanisches Schaltglied als Überbrückungseinrichtung vorgesehen ist.

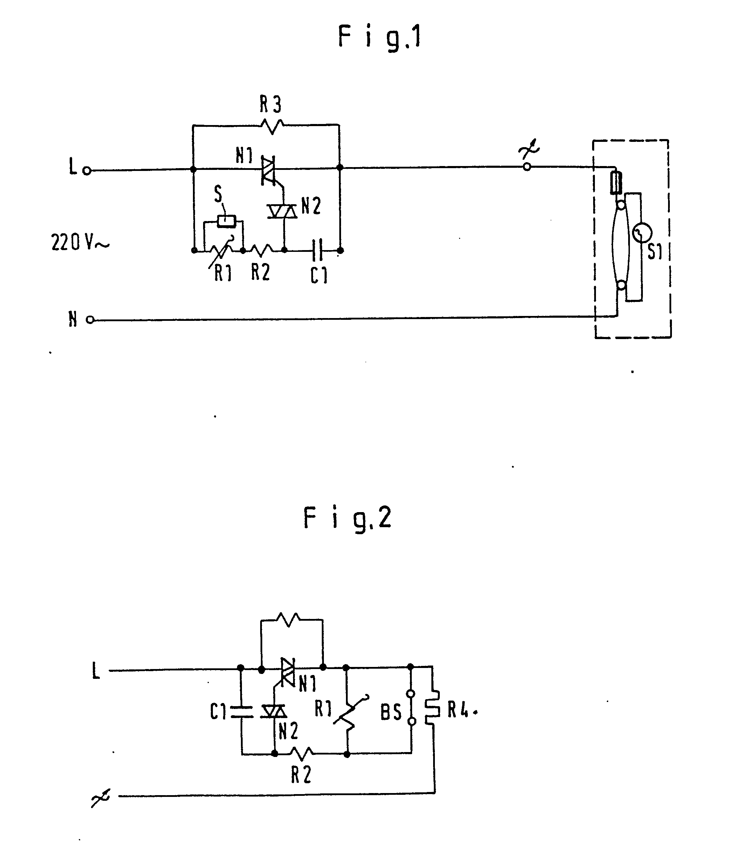

Das in Fig. 1 wiedergegebene Ausführungsbeispiel arbeitet wie folgt:

Nach Anschluß der Klemmen «L» und «N» an 220 Volt Wechselspannung fließt über die aus dem Grundstromwiderstand R3 und dem RC-Glied R1, R2, C1 gebildete Parallelschaltung ein Glimmstrom durch den die beiden Heizwendel einer Leuchtstofflampe (Röhre) miteinander verbindenden Glimmstarter S1. Der durch den Steuerkreis gezündeten Triac leitet, die Lampe leuchtet. Der Kondensator C1 wird periodisch über R1 und R2 aufgeladen und über die Vierschichtdiode N2 und den Steuerkreis des Triacs N1 entladen. Dabei benötigt die Spannung über dem Kondensator C1 eine – mit R1 veränderbare – Zeit, um die Triggerschwelle der Vierschichtdiode N2 zu überschreiten. Es resultiert daraus ein gegenüber dem Nulldurchgang der Eingangsspannung zeitlich veränderbares Zünden des Triacs; die Eingangsspannung wird also um eine einstellbare Zeit T verzögert zu der Leuchtstofflampe geschaltet. Fließt – bedingt durch den Nulldurchgang der Wechselspannung – kein Strom durch den Triac, so sperrt dieser. Dieser Zünd- und Löschvorgang des Triacs wiederholt sich periodisch mit der Netzfrequenz.

Über den Grundstromwiderstand R3 jedoch fließt auch während der Sperrzeit des Triacs ein Minimalstrom, welcher einen ausreichenden Spannungsabfall über der Röhre bewirkt, um ein Erlöschen der Leuchtstofflampe zu verzögern (nahe dem Nulldurchgang der Eingangsspannung erlischt die Lampe, zündet jedoch danach von selbst wegen des noch vorhandenen Plasmas in der Röhre) andererseits zu gering ist, um den Glimmstarter S1 zum Starten zu veranlassen.

Dabei wird durch den Grundstromwiderstand R3 erreicht, daß auch während der Sperrzeit des Triacs ein Minimalstrom durch die Leuchtstofflampe fließt, welcher ein Erlöschen der Leuchtstofflampe verhindert. Demgemäß ist ein ständiges neues Zünden der Leuchtstofflampe nicht erforderlich, die Leuchtstofflampe leuchtet kontinuierlich und flackerfrei, wobei die Helligkeit – und damit die Leistungsaufnahme – über eine Einstellung der Sperrzeit des Triacs einstellbar ist.

Die in der Schaltung gezeigte Verwendung eines festen Widerstandes R2 und eines regulierbaren Widerstandes R1 bewirkt, daß auch bei Einstellung eines Widerstandes von O an dem regulierbaren Widerstand R1 die Lampe nicht erlischt.

Bei der erfindungsgemäßen Ausgestaltung mit einem parallel zu dem Widerstand R1 liegenden Schaltkreis S wird bewirkt, daß der Widerstand R1 solange überbrückt wird, bis die Lampe gezündet hat. Die Lampe wird also zunächst mit der vollen Leistung beaufschlagt; ein derartiger Schaltkreis hat die Aufgabe sicherzustellen, daß die Leuchtstofflampe bei Einschalten zündet, da daß bei erfindungsgemäß reduzierter Leistungsaufnahme nicht gewährleistet ist. Der Schaltkreis, der den einstellbaren Widerstand R1 bis zum Zünden der Lampe überbrückt, kann entweder durch einen Zeitkreis realisiert werden, oder aber durch einen Kreis, welcher mittels einer Photodiode das erfolgreiche Starten der Leuchtstofflampe feststellt.

Bei dem Ausführungsbeispiel von Fig. 2 ist der einstellbare Widerstand R1, wie ersichtlich, durch ein Schaltglied BS überbrückt, welches aus einem Thermobimetallkontakt besteht, der normalerweise, d.h. ohne Erwärmung, geschlossen ist. Benachbart zum Thermobimetallkontakt BS liegt ein im Lampenstromkreis befindlicher Heizwiderstand R4, der beispielsweise in Form einer Wicklung den Thermobimetallkontakt BS überbrücken kann. Beim Einschalten, also bei geschlossenem Thermobimetallkontakt BS wird ein sehr kleiner Anschnittwinkel des Wechselstromstellers erreicht, d.h., die Netzspannung wird praktisch in voller Höhe der Leuchtstofflampe über den Heizwiderstand R4 zugeführt. Nach etwa 10 Sekunden zündet die Leuchtstofflampe. Nach weiteren etwa 10–30 Sekunden ist der Thermobimetallkontakt BS durch den Heizwiderstand R4 soweit erwärmt, daß er öffnet, wodurch R1 nicht mehr überbrückt ist. Nun kann eine Einstellung des Wechselstromstellers mittels des einstellbaren Widerstandes R1 erfolgen, d.h. also, die Leistungsaufnahme der Lampe kann entsprechend reguliert werden. Der Parallelwiderstand R3 läßt auch bei diesem Ausführungsbeispiel bei nicht gezündetem Triac N1 einen Grundstrom über die Leuchtstofflampe fließen, wodurch erreicht wird, daß die Leuchtröhre nicht erlischt, während der Triac N1 keinen Strom führt.

Es versteht sich, daß die erfindungsgemäße Schaltungsanordnung auch zum Regulieren mehrerer parallelgeschalteter Leuchtstofflampen verwendet werden kann und daß die erfindungsgemäße Schaltung nicht auf die Verwendung von Glimmstartern beschränkt ist.

Die in der vorstehenden Beschreibung, der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

**Patentansprüche**

1. Schaltungsanordnung zur Verminderung der Leistungsaufnahme einer Leuchtstofflampe durch eine Phasenanschnittssteuerung mittels zweier steuerbarer, antiparallel liegender elektrischer Ventile, gekennzeichnet durch eine in Serie mit der Lampe befindlichen Parallelschaltung eines Grundstromwiderstandes (R3), der elektrischen Ventile (N1) und eines RC-Gliedes (R1, R2, C1), wobei der Widerstand des RC-Gliedes (R1, R2) einstellbar ist und die Ventile (N1) von einer Vierschichtdiode (N2) steuerbar sind, welche die über dem Kondensator (C1) liegende Spannung abfragt und bei Überschreiten eines Schwellwertes die Ventile öffnet.

2. Schaltungsanordnung nach Anspruch 1, dadurch gekennzeichnet, daß die steuerbaren elektrischen Ventile einen Triac (N1) aufweisen.

3. Schaltungsanordnung nach Anspruch 1 oder 2, dadurch gekennzeichnet, daß der Widerstand des RC-Gliedes aus einem festen Widerstand (R2) und einem einstellbaren Widerstand (R1) besteht.

4. Schaltungsanordnung nach einem der vorangehenden Ansprüche, gekennzeichnet durch eine Überbrückungseinrichtung (S; BS) zum Überbrücken zumindest des einstellbaren Widerstandes (R1) des RC-Gliedes (R1, R2, C1) während des Einschaltvorganges bis zum Zünden der Leuchtstofflampe.

5. Schaltungsanordnung nach Anspruch 4, dadurch gekennzeichnet, daß die Überbrückungseinrichtung einen elektrischen Schaltkreis (S) aufweist.

6. Schaltungsanordnung nach Anspruch 5, dadurch gekennzeichnet, daß der elektrische Schaltkreis (S) einen Zeitkreis aufweist.

7. Schaltungsanordnung nach Anspruch 5 oder 6, dadurch gekennzeichnet, daß der elektrische Schaltkreis (S) eine Photodiode aufweist, die das erfolgreiche Starten der Leuchtstofflampe feststellt.

8. Schaltungsanordnung nach Anspruch 4, dadurch gekennzeichnet, daß die Überbrückungseinrichtung ein im Ruhezustand geschlossenes Schaltglied (BS) aufweist, welches durch ein galvanisch hiervon getrenntes, im Stromkreis der Leuchtstofflampe liegendes Betätigungsglied (R4) derart beaufschlagbar ist, daß das Schaltglied mit vorzugsweise einstellbarer zeitlicher Verzögerung nach dem Einschalten der Leuchtstofflampe öffnet und nach dem Abschalten erneut schließt.

9. Schaltungsanordnung nach Anspruch 8, dadurch gekennzeichnet, daß das Schaltglied aus einem Thermobimetallkontakt (BS) oder dergleichen und das Betätigungsglied aus einem diesem benachbarten Heizwiderstand (R4) oder dergleichen besteht.

10. Schaltungsanordnung nach Anspruch 8, dadurch gekennzeichnet, daß das Schaltglied aus einem beleuchtungsabhängigen elektrischen Widerstand oder dergleichen und das Betätigungsglied aus einem Leuchtelement oder dergleichen besteht.

## Claims

1. A circuit arrangement for reducing the power consumption of a fluorescent lamp by phase angle control by means of two controllable anti-parallel rectifiers, characterised by a parallel circuit of a basic current resistor (R3), the rectifiers (N1), and an RC network (R1, R2, C1), said parallel circuit being in series with the lamp, the resistor of the RC network (R1, R2) being adjustable and the rectifiers (N1) being controllable by a four-layer diode (N2) which monitors the voltage across the capacitor (C1) and opens the rectifiers if a threshold value is exceeded.

2. A circuit arrangement according to claim 1, characterised in that the controllable rectifiers comprise a triac (N1).

3. A circuit arrangement according to claim 1 or 2, characterised in that the RC network resistor consists of a fixed resistor (R2) and an adjustable resistor (R1).

4. A circuit arrangement according to any one of the preceding claims, characterised by a bridging device (S, BS) for bridging at least the adjustable resistor (R1) of the RC network (R1, R2, C1) during the switching-on operation until striking of the fluorescent lamp.

5. A circuit arrangement according to claim 4, characterised in that the bridging device comprises an electrical switching circuit (S).

6. A circuit arrangement according to claim 5, characterised in that the electrical switching circuit (S) comprises a time circuit.

7. A circuit arrangement according to claim 5 or 6, characterised in that the electrical switching circuit (S) comprises a photo-diode which detects successful starting of the fluorescent lamp.

8. A circuit arrangement according to claim 4, characterised in that the bridging device comprises a switching element (BS) which is closed in the inoperative state and which an actuating element (R4) electrically separated therefrom and situated in the fluorescent lamp circuit so actuates that the switching element opens with a preferably adjustable time delay after the switching on of the fluorescent lamp and re-closes after the switching-off operation.

9. A circuit arrangement according to claim 8, characterised in that the switching element consists of a thermal bimetallic contact (BS) or the like and the actuating element consists of a heating resistor (R4) or the like adjacent the same.

10. A circuit arrangement according to claim 8, characterised in that the switching element consists of a lighting-dependent electrical resistor or the like and the actuating element consists of a light-emitting element or the like.

## Revendications

1. Agencement de circuit pour diminuer la puissance absorbée par une lampe luminescente grâce à une commande à déphasage au moyen de deux soupapes électriques, commandables, montées en anti-parallèle, caractérisé par un montage en parallèle, situé en série avec la lampe, d'une résistance de courant de base (R3), des soupapes électriques (N1) et d'un circuit RC (R1, R2, C1), la résistance du circuit RC (R1, R2) étant réglable et les soupapes (N1) étant commandables par une diode à quatre jonctions (N2), qui interroge la tension aux bornes du condensateur (C1) et ouvre les soupapes lorsqu'il y a dépassement d'une valeur de seuil.

2. Agencement de circuit selon la revendication 1, caractérisé par le fait que les soupapes électriques commandables comportent un triac.

3. Agencement de circuit selon la revendication 1 ou 2, caractérisé par le fait que la résistance du circuit RC est formée par une résistance fixe (R2) et une résistance réglable (R1).

4. Agencement de circuit selon l'une des revendications précédentes, caractérisé par un moyen de pontage (S; BS) pour shunter au moins la résistance variable (R1) du circuit RC (R1, R2, C1) pendant le processus de mise en circuit jusqu'à l'allumage de la lampe luminescente.

5. Agencement de circuit selon la revendication 4, caractérisé par le fait que le moyen de pontage comporte un circuit de commutation (S).

6. Agencement de circuit selon la revendication 5, caractérisé par le fait que le circuit de commutation (S) comporte un circuit de temporisation.

7. Agencement de circuit selon la revendication 5 ou 6, caractérisé par le fait que le circuit de commutation (S) comporte une photo-diode qui assure le démarrage satisfaisant de la lampe.

8. Agencement de circuit selon la revendication 4, caractérisé par le fait que le moyen de pontage comporte un organe de coupure (BS) fermé au repos, qui est attaquable par un organe de commande (R4) situé sur le circuit de la lampe et séparé galvaniquement de l'organe de coupure, de manière que l'organe de coupure s'ouvre après le démarrage de la lampe, de préférence avec un retard réglable et se referme après la coupure.

9. Agencement de circuit selon la revendication 8, caractérisé par le fait que l'organe de coupure est constitué par un contact thermo-bimétallique (BS) ou l'analogue, et l'organe de commande par une résistance chauffante (R4) voisine de celui-ci ou l'analogue.

10. Agencement de circuit selon la revendication 8, caractérisé par le fait que l'organe de coupure est constitué par une résistance électrique dépendant de l'éclairement, ou l'analogue, et l'organe de commande par un élément lumineux ou l'analogue.

# F i g.1

# F i g.2